# EUROPEAN PATENT SPECIFICATION

(11) **EP 4 429 203 B1**
(45) Date of publication and mention of the grant of the patent: **04.11.2026**
(21) Application number: 23160986.8
(22) Date of filing: 09.03.2023
(51) Int. Cl.: H04L 67/12, H04W 4/38

(54) **METHOD FOR ENABLING AN EFFICIENT DATA PROCESSING IN A DISTRIBUTED NETWORK OF DEVICES**
VERFAHREN ZUR ERMÖGLICHUNG EINER EFFIZIENTEN DATENVERARBEITUNG IN EINEM VERTEILTEN NETZWERK VON VORRICHTUNGEN
PROCÉDÉ PERMETTANT UN TRAITEMENT EFFICACE DE DONNÉES DANS UN RÉSEAU DISTRIBUÉ DE DISPOSITIFS

(43) Date of publication of application: 11.09.2024
(73) Proprietor: ABB SCHWEIZ AG, 5400 Baden (CH)
(72) Inventor: SARKAR, Santonu, 560076 Bangalore (IN); PLATENIUS-MOHR, Marie, 69493 Hirschberg an der Bergstraße (DE); AMARLINGAM, Madapu, 501102 Vikarabad (IN); SCHLAKE, Jan Christoph, 64293 Darmstadt (DE); BORRISON, Reuben, 68723 Schwetzingen (DE)
(74) Representative: Maiwald GmbH

(56) References cited:
- CN-A- 115 668 084
- US-A1- 2017 187 696

## Description

### FIELD OF THE INVENTION

The present invention relates to method for enabling an efficient data processing in a distributed network of devices.

### BACKGROUND OF THE INVENTION

As industrial process automation across various industries, such as the energy sector, mining, manufacturing, utility sector, etc., gear towards Industry 4.0 to optimize a production process and production cycle, it is becoming essential to gain insights into the relevant process and equipment conditions.

An industrial production process is established by various devices that are connected to each other to exchange different types and a large amount of data. The US 113 235 44 B2 or the US 2022 / 023 195 2 A1 describe examples in the prior art how data can be exchanged in a network of devices. The CN 115 668 084 A refers to a diagnostic device, server, and diagnostic method. The US 2017 / 187696 A1 refers to a sensor data collection, protection, and value extraction.

The massive amount of data in an industrial process from a large number of field or plant devices makes it necessary to deploy a hierarchy of so-called edge devices to a master device to handle the data efficiently for real-time analytics without violating data security constraints. However, the data availability in such an industrial process can be severely impacted when the communication among the devices in a network of distributed devices for an industrial process is interrupted due to a failure. As long as the failure exists, a huge amount of backlog data is generated by the various devices in such a network that needs to be processed after recovery of the failure. Therefore effective strategies have to be implemented how to process the amount of data in case of a failure in a network of devices for an industrial process.

Another challange in an industrial process is usually the presence of many different or heterogeneous data types generated from different devices that need to be handled by each of the devices participating in such a network of an industrial process. In particular, when data handling is based on machine learning modeling, the number of machine models to be managed in each of the devices can increase significantly. As each of the machine models needs to be trained, evaluated, deployed and monitored, the costs of data handling can easily increase, generating a high model management overhead.

There is a need to address these issues.

### SUMMARY OF THE INVENTION

Therefore, it would be advantageous to provide an improved concept for enabling an efficient data processing in a distributed network of devices, especially in case of huge data transmission backlogs. The invention is set out in the appended set of claims.

Data processing in the context of the present invention may apply to an efficient data exchange in a network of distributed devices or to implement strategies how to react effectively in certain situations, e.g. a loss of data, during operation of the devices.

The object of the present invention is solved by the subject matter of the independent claims, wherein further embodiments are incorporated in the dependent claims.

In a first aspect of the present invention, there is provided a method for enabling an efficient data processing in a distributed network of devices, comprising the following steps:
- collecting first data from at least one client device sent by at least one plant device via a first communication interface;
- storing the first data in a data storage of the at least one client device;
- profiling the first data to obtain characteristical information of the collected first data; determining a data processing strategy upon a result of the characteristical information of the first data;
- processing the first data according to the data processing strategy and decide which data of the first data need to be sent to the master device via a second communication interface.

In other words, a core idea behind the present invention is to characterize the data that is received from at least one client device sent by a plant device and to first determine a data strategy how the data is processed upon the data characterization before the data is transmitted to another device, e.g. at least one master device, a further or second client device, a cloud, in the network of distributed devices.

For this the distributed network or the system or platform comprises a number of client devices that are connected to other client devices and to at least one master devices, e.g. in a hierarchical manner. The master device or higher-edge device usually executes a data-intensive data handling program, e.g. maschine learning. The at least one client device or the lower-edge device usually collects data from a plant device sensoring various types of data, e.g. temperature data, speed data. A data-type related strategy that can be embodied in form of a file determines which data is send in which manner. In this way, the present invention provides multiple data transfer strategies based on different types of data demand or based on changing requirements in the network or application.

A data processing strategy in the context of the present invention could mean to handle the first data before sending to the master device with at least one of grouping, compressing or selecting type and/or a selecting an amount of stored first data in a data storage of a device, e.g. client, master, cloud.

At the client devices or lower edge devices data is defined according to its availability for other devices in the network classified in categories such as hot data, warm data, cold data or cloud data.

Hot data or live data means that the latest data must be given as soon as possible when the edge or network infrastructure rconnectivity is recovered from a failure. Application requires unprocessed, live telemetry data during training or during operation. Examples may be data having high fluctuations, data for real time monitoring, prediction and actions. Hot data are data with an extremely high data availability requirement.

Warm data means that applicatrions need the latest data but at a low or medium priority, after connectivity restoration. Applications do not require new data or data is not generated very frequently. Data collected after a long interval is sufficient. Warm data can be used for complex measurements such as misalignment, time-frequency domain conversion, resonance analysis, narrow band envelope analysis, etc. Warm data can be used for retraining a machine learning model. Typical applications can be periodic health monitoring or prediction.

Cold or offline data means that there is no need to get the latest data in the immediate future. Applications require a mix of warm and historical data to build robust machine learning models from scratch or perform periodic retraining if the model performance is unsatisfactory.

Depending on this type of data, data is either send and/or stored in the at least one client device or any other storage device connected to the device. Sending data is effected by some decisions regarding data loss meaning how to deal with missing data, data compression meaning if there is a need ot compress data and in which manner. In this way, an effective data handling in case of large amounts of data and the existence of different types of data can be easily applied and adapted to changing requirements in the application or network. A further advantage is that data handling including data transmission in such a network can be easily prioritized.

A further advantage of the present invention is that a cohorting-based data clustering can be performed in an effective manner reducing the number of machine learning models in the devices of the network.

A further advantage of the present invention is that data availability in the network can be handled efficiently in the event of a failure and the subsequent recovery as both data velocity and data veracity are taken into account while achieving real-time availability of latest data specifically when the bandwidth is not sufficient.

A further advantage of the present invention is that if an analytics application can accommodate processed or aggregated data, the solution offers a flexible aggregation logic to send aggregated data rather than raw data to the enquiring devices in the network. This approach can provide the latest hot data quickly, when there is a backlog of telemetry data in a client device due to a communication failure. If the application needs hot raw data, the solution uses e.g. auto encoding to transmit latest data which are collected from the client device to the master device (or to the cloud) quickly.

A further advantage of the present invention is the ease of management of maschine learning (ML) model reducing a data variety in the network. The approach of the present invention performs cohorting of data which in turn reduces the number of models. The approach uses a predefined asset taxonomy to cohort data.

Another advantage of the present invention is that data quality is improved. By using a flexible decoding, when auto-encoder is used to encode, the data can be performed anywhere, e.g. master device or in the cloud. Decoding can also detect anomaly in the data, if decoding fails.

According to an example, the characteristical information of the first data includes at least one of type of data, statistical information, data distribution property, static or dynamical data. Therein, the advantage is achieved that a data-type related strategy of handling the first data can be better adopted to the existing type of data resulting in a more efficient data handling process.

According to an example, the at least one type of first data is one of at least, raw data, hot data, warm data or cold data which indicates a relevance of the first data to be sent from the at least one client device to the master device. Therein, the advantage of an efficient data handling in the network is achieved. Further, a more detailed data processing strategy can be implemented.

According to an example, the first data is time-series data. The advantage achieved is that time-series data or telemetry data is handled in an efficient way when generated in various process industries, e.g. chemical, pulp and paper, cement, water networks, power plants, Food and Beverage processing, oil and gas industry etc.

According to an example, the data processing strategy is at least one of data aggregation, data compressing, data selecting, data resampling, data imputation, data augmentation or raw data processing. Therein, the advantage is achieved that the data processing strategy can be applied to different needs and changing requirements in the network.

According to an example, the step of determining the data processing strategy comprises the step of determining an aggregation parameter of the first data that influences a strategy in the at least one client device about how the first data need to be aggregated. Therein, the advantage of a more efficient data processing in the network is achieved. It should be noted that the aggretation parameter may be an amount of accumulated backlog and unsent first data by the at least one client device to the master device in case of a communication failure until recovery of the communication failure.

According to an example, when it is decided according to the aggregation parameter to aggregate the first data, perform data aggregation of at least a part of the first data to obtain second data based on the data processing strategy of the first data, wherein the data aggregation comprises further the step of determining a transmission format corresponding to the type of data of the second data in order to decide, which of the second data needs to be sent to the master device by the at least one client device. Therein, the advantage of a more efficient data processing in the network is achieved.

A transmission format for first data could be for example be grouped, aggregated, zipped, uncompressed, raw data etc.

According to an example, the transmission format in the data aggregation is based on at least one aggregation rule that has been determined by the master device in advance and provided to the at least one client device. In this way, the advantage of a data aggregation method can be easily and in an efficient manner provided to a plurality of client devices saving data transmission costs.

Therein, the advantage is achieved that the distributed network is established in a hierarchical manner or in a peer-two-peer manner between the master device and the at least one client device. In this way, the advantage of an efficient data processing can be easily implemented according to the requirments of the network.

In a second aspect of the present invention, a computer is provided comprising a processor configured to perform the method of the preceding aspect.

In a third aspect of the present invention, there is provided a computer program product comprising instructions which, when the program is executed by a processor of a computer, causes the computer to perform the method of any of the first and second aspects.

In a fourth aspect of the present invention, a machine-readable data medium and / or download product containing the computer program of the third aspect.

### BRIEF DESCRIPTION OF THE DRAWINGS

Exemplary embodiments will be described in the following with reference to the following drawings:
Fig. 1 illustrates a schematic flow-diagram of a method of the present invention;
Fig. 2 illustrates a schematic example of a network of distributed devices exchanging data according to a method of the present invention; and
Fig. 3 illustrates a schematic flow-diagram of data processing between a master device and a client device according to an embodiment of the present invention.

### DETAILED DESCRIPTION OF THE DRAWINGS

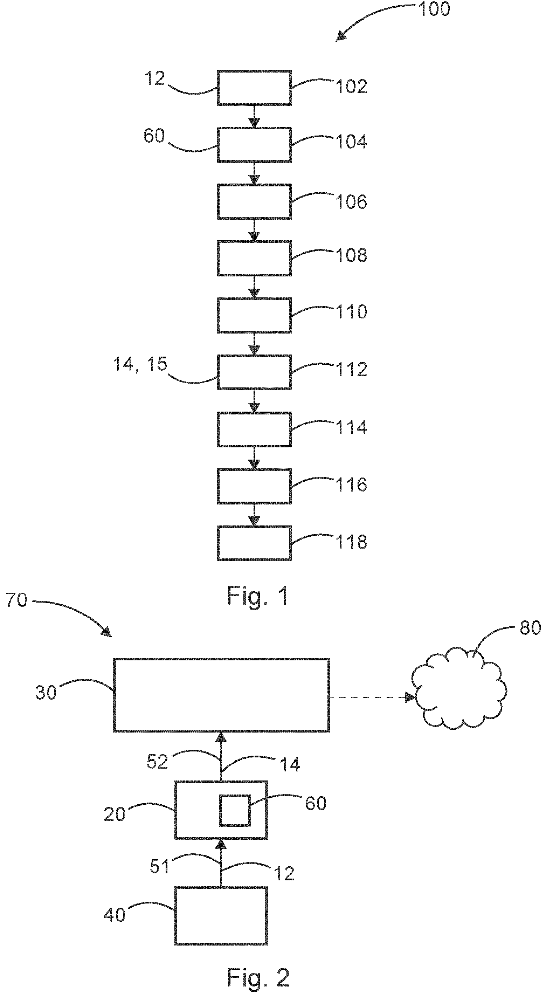

Fig. 1 illustrates a schematic flow-diagram of a method 100 of the present invention.

In a first step 102, first data 12 is collected from at least one client device 20 sent by at least one plant device 40 via a first communication interface 51.

In a second step 104, the first data 12 is stored in a data storage 60 of the at least one client device 20.

In a third step 106, the first data 12 is profiled to obtain characteristical information of the collected first data 12.

In a fourth step 108, a data processing strategy upon a result of the characteristical information of the first data 12 is determined. The characteristical information of the first data 12 may include at least one of type of data, statistical information, data distribution property, static, stationarity of data or dynamical data.

It should be further noted that the transmission format in the data aggregation is based on at least one aggregation rule that has been determined by the master device 30 in advance and provided to the at least one client device 20.

In a fifth step 110, the first data 12 is processed according to the data processing strategy and decide which data of the first data 12 need to be sent 118 to the master device 30 via a second communication interface 52. The data processing strategy is at least one of data aggregation, data compressing, data selecting, data resampling, data imputation, data augmentation or data raw data processing.

The at least one type of first data 12 is one of at least, raw data, hot data, warm data or cold data which indicates a relevance of the first data 12 to be sent from the client device 20 to the master device 30. Further, the first data 12 may be time-series data or telemetry data.

Optionally, the step 108 of determining the data processing strategy comprises the step of determining 112 an aggregation parameter 15 of the first data 12 that influences a strategy in the at least one client device 20 about how the first data 12 need to be aggregated.

Optionally, when it is decided according to the aggregation parameter 15 to aggregate the first data 12, perform the step 114 of data aggregation of at least a part of the first data 12 to obtain second data 14 based on the data processing strategy of the first data (12), wherein the data aggregation comprises further the step of determining 116 a transmission format corresponding to the type of data of the second data 14 in order to decide, which of the second data 14 needs to be sent to the master device 30 by the at least one client device 20. In this context, it should be mentioned that not all data of the first data might to be aggregated.

Fig. 2 illustrates a schematic example of a distributed network 70 exchanging data according to a method of the present invention.

The distributed network 70 may be established in a hierarchical manner or in a peer-two-peer manner between the master device 30 and the at least one client device 20. The client device 20 is connected via a first communication interface 51 to a plant device 40 that senses or processes sensed data, e.g. a temperature value, a speed value, as first data 12.

The first data 12 may be stored in a data storage 60 of the client device 20 for a further data processing, such as a data profiling to obtain characteristic information of the collected first data or determining a correspondin data processing strategy.

The first data 12 is then processed according to a determined data processing strategy to the master device 30 via a second communication interface 52. For example, one data processing strategy for the first data 12 could be data aggregation of at least a part of the first data 12 to obtain second data 14. The data aggregation comprises further the step of determining a transmission format corresponding to the type of data of the second data 14 in order to decide, which of the second data 14 needs to be sent to the master device 30 by the at least one client device 20.

The master device 30 can optionally be connected to an external data center 80, e.g. a cloud, for exchanging the data to further proceed the received second data 14. The master device 30 processes the received second data 14, e.g. by a further aggregation or performing data analyzing.

The determination of an adequate data processing strategy is implemented in the client device 20 in this embodiment. However, it might be possible that the rules for generating a basic data processing strategy might also be generated in the global master device and then be distributed from the master device to the plurality of client devices 20 for a client device-based adaption of the received basic data processing strategy.

It should be noted that the flow of data in the figure 2 may be one-way from the client device 20 to the master device 30. However, a data transfer from the master device 30 to the client device 20 is also possible depending on the application.

In the network 70, the master device 30 may be on a higher hierarchical level than the client device. However, the present invention can be applied to multiple client device topologies. The following gives some examples of possible client device topologies:
- Hierarchical topology, strict security, less powerful client devices: The client device can send raw data to the master device which stores or aggregates the raw data to an external data center, e.g. a cloud.
- Hierarchical topology, strict security, powerful client devices can aggregate data and send aggregated data to the master device, which can then send it to an external data center, e.g. a cloud.
- Distributed client devices with a direct connection to a cloud: A set of client devices can perform aggregations and then send them directly to a cloud.

In regard of a customized data aggregation, the following examples are provided:
- The system allows various aggregation rules based on window-based aggregation with different window sizes.
- The system allows configurable rules to aggregate data that are not older than a certain time-period.
- Powerful client device: Auto-encoding of data at the client-device to reduce data size. Decoding can happen at the master device if it requires latest, non-aggregated data for computation.
- Less Powerful client device: Auto encoding can happen on the master device. Decoding can happen on the cloud.

The handling of data Variety or data clustering for an optimal number of models according to the present invention can be performed in various ways:
Cohort (or grouping) the data from different client devices based on
i) asset (= device) type (using asset taxonomy),
ii) similarity of data distributions (coming from different assets). The clustering can be done on i) client devices, where the master device can coordinate this activity or ii) at the central location master device depending on the business scenario. The purpose of grouping is to get the data that captures all relevant scenarios (variety) and enough data for each relevant scenario (volume), which helps in training robust ML models and improve the model generalization performance.
iii) For grouping or cohorting the data from different assets statistical difference between two data sets can be used. For example, Kullback-Leibler (KL) divergence is one approach that can be used to determine the statistical difference between the data from two assets. On top of statistical difference values, we use clustering algorithms such as K-means or hierarchical clustering for grouping the clients based on data.

The entire functionality of grouping or cohorting can be implemented in the "Data cohorting" module at the master device.

The master devices may learn uncertainty levels coming from client devices (one might predict better than another) and use it for aggregation and display it with the results. The client devices may aggregate data differently to provide different quality level data to higher edge. For a Machine Learning application in the higher edge this could for example mean to generate more than one central model, e.g. distinguish between different applications, client devices / related assets by the weights they send for aggregation to the master device.

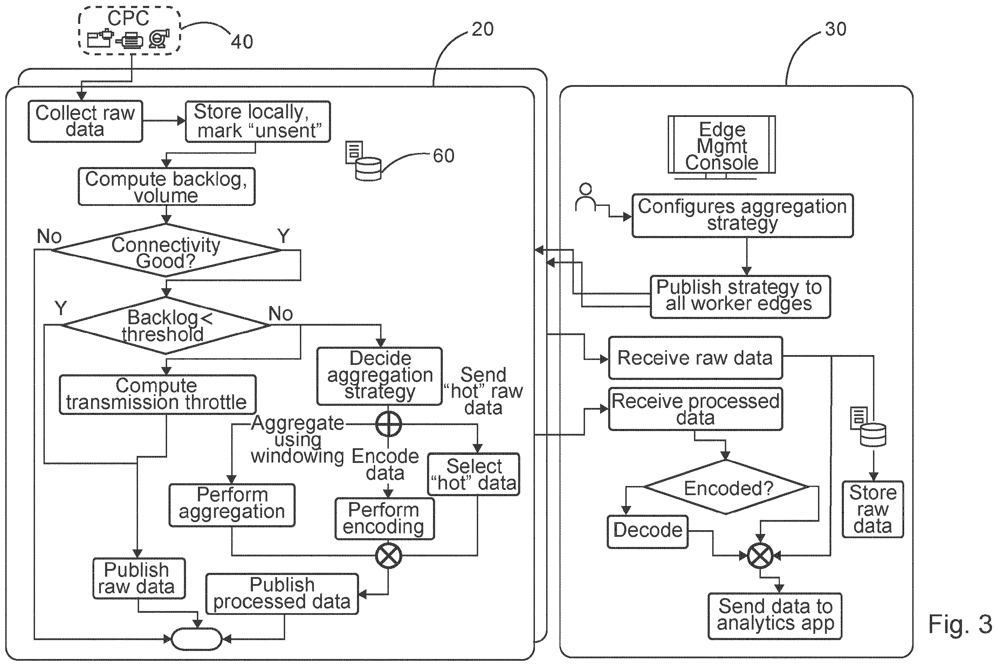

Fig. 3 illustrates a schematic flow-diagram of data processing between a master device 30 and a client 20 device according to an embodiment of the present invention.

A data collection-and-transmission module of the client device 20 is responsible for collecting raw data from a Core Process Control domain (= CPC domain) or a client device 40 which is considered as the same in this figure and send it to the master device 20. The CPC is where the current and well-protected process control is implemented. It contains deterministic control systems with high availability and reliability. It will be called the "Core Process Control" domain (abbreviated CPC). The core process control domain (= CPC domain) is responsible for the reliable and deterministic operation of the plant. These systems run in a deterministic way and the communication between the components within the CPC domain is mostly based on proprietary interfaces.

The data collection module stores the data in the local database 60, e.g. with a timestamp, and markes the received data (= first data) as unsent. The transmission module in parallel, sends the stored, and "unsent" data, e.g. in first in, first out manner, under normal circumstances to the master device 30. The client device 20 also has a kind of a watchdog component that detects whether the connectivity to the master device 30 is lost. If so, the transmission module stops sending any data and waits for the watchdog to provide a transmission recovery signal.

The data storage 60 of the client device 20 keeps storing the data in the local datastore as long as the client device 20 has the storage capacity to hold the incoming data. If the storage capacity is empty or the data storage 60 is completely occupied with data, the data store module discards data using one of the two strategies:
- Discard old data: It flushes out old (telemetry) data and stores the new incoming data.
- Discard new data: It does not accept any new data from CPC.

The data forward module of the client device 20 then transmits the data in FIFO manner as long as the backlog is within a defined threshold. If the threshold exceeds by a great margin, it assumes that there has been an outage and enables a determined aggregation strategy to fulfil the data demand. If there is no explicit demand, then it continues to send the data to the master device 30 in FIFO manner. If the data availability requirement indicates that the master device requires live data or hot data, then the this type of data is immediately sent after recovery of the failure to the master device.

The data transmission between client device and master device according to the present invention can be as following:
The client device or worker edge device is configured to push the data backlog to the master device or upper edge device from the last successful data transmission. The push algorithm considers the volume of backlog and based on the configuration, can take one or more of the following strategies:
- Bandwidth throttling: The client device applies an upper bound on the network bandwidth consumption and adjusts transmission speed of the backlog data.
- Latest data first: The client device can send the latest chunk (configurable) of data first.

### Reference signs

- 100: Method
- 102: Collecting
- 104: Storing
- 106: Profiling
- 108: determining
- 110: Processing
- 112: Determining
- 114: Performing
- 116: Determining
- 118: Sending

- 12: First data
- 14: Second data
- 15: Aggregation parameter
- 20: Client device (Recipient)
- 30: Master device (Sender)
- 40: Plant device / CPC
- 50: First communication interface
- 52: Second communication interface
- 60: Data storage
- 70: Distributed network
- 80: External data center

## Claims

1. Method (100) for enabling an efficient data processing in a distributed network (70) of devices (20, 30), comprising:
- collecting (102) first data (12) by at least one client device (20) sent from at least one plant device (40) via a first communication interface (50);
- storing (104), by the at least one client device (20), the first data (12) in a data storage (60) of the at least one client device (20);
- profiling (106), by the at least one client device (20), the first data (12) to obtain characteristical information of the collected first data (12), wherein the characteristical information of the first data (12) includes at least one type of first data, **characterized in that** the at least one type of first data (12) is one of at least, raw data, hot data, warm data or cold data which indicates a relevance of the first data (12) to be sent from the client device (20) to the master device (30);
- determining (108), by the at least one client device (20), a data processing strategy based upon a result of the characteristical information of the first data (12), wherein determining the data processing strategy comprises determining an aggregation parameter of the first data;
- processing (110), by the at least one client device (20), the first data (12) according to the data processing strategy by aggregating the first data according to the aggregation parameter and deciding which data of the aggregated first data (12) need to be sent (118) to the master device (30) via a second communication interface (52).

2. Method (100) according to any of the preceding claims, wherein the first data (12) is time-series data.

3. Method (100) according to any of the preceding claims, wherein the data processing strategy is at least one of data aggregation, data compressing, data selecting, data resampling, data imputation, data augmentation or data raw data processing.

4. Method (100) according to any of the preceding claims, wherein the step of determining (108) the data processing strategy comprises the step of determining (112) an aggregation parameter (15) of the first data (12) that influences a strategy in the at least one client device (20) about how the first data (12) need to be aggregated.

5. Method (100) according to claim 4, wherein when it is decided according to the aggregation parameter (15) to aggregate the first data (12), perform (114) data aggregation of at least a part of the first data (12) to obtain second data (14) based on the data processing strategy of the first data (12), wherein the data aggregation comprises further the step of determining (116) a transmission format corresponding to the type of data of the second data (14) in order to decide, which of the second data (14) needs to be sent to the master device (30) by the at least one client device (20).

6. Method (100) according to claim 5, wherein the transmission format in the data aggregation is based on at least one aggregation rule that has been determined by the master device (30) in advance and provided to the at least one client device (20).

7. Method (100) according to any of the preceding claims, wherein the distributed network (70) is established in a hierarchical manner or in a peer-two-peer manner between the master device (30) and the at least one client device (20).

8. A computer comprising a processor configured to perform the method of any preceding claims 1 to 7.

9. A computer program product comprising instructions which, when the computer program is executed by a processor of a computer, causes the computer to perform the method of any of claims 1 to 7.

10. Machine-readable data medium containing the computer program according to claim 9.

## Patentansprüche

1. Verfahren (100) zum Ermöglichen einer effizienten Datenverarbeitung in einem verteilten Netzwerk (70) von Vorrichtungen (20, 30), umfassend:
- Sammeln (102), durch wenigstens ein Client-Device (20), erster Daten (12), die von wenigstens einem Anlagengerät (40) über eine erste Kommunikationsschnittstelle (50) gesendet werden;
- Speichern (104), durch das wenigstens eine Client-Device (20), der ersten Daten (12) in einem Datenspeicher (60) des wenigstens einen Client-Device (20);
- Profilieren (106), durch das wenigstens eine Client-Device (20), der ersten Daten (12), um charakteristische Informationen der gesammelten ersten Daten (12) zu erhalten, wobei die charakteristischen Informationen der ersten Daten (12) wenigstens einen Typ erster Daten umfassen,
**dadurch gekennzeichnet, dass** der wenigstens eine Typ erster Daten (12) einer von zumindest Rohdaten, Hot Data, Warm Data oder Cold Data ist, der eine Relevanz der von dem Client-Device (20) an das Master-Device (30) zu sendenden ersten Daten (12) angibt;
- Bestimmen (108), durch das wenigstens eine Client-Device (20), einer Datenverarbeitungsstrategie auf Grundlage eines Ergebnisses der charakteristischen Informationen der ersten Daten (12), wobei das Bestimmen der Datenverarbeitungsstrategie das Bestimmen eines Aggregationsparameters der ersten Daten umfasst;
- Verarbeiten (110), durch das wenigstens eine Client-Device (20), der ersten Daten (12) gemäß der Datenverarbeitungsstrategie durch Aggregieren der ersten Daten gemäß dem Aggregationsparameter und Entscheiden, welche Daten der aggregierten ersten Daten (12) über eine zweite Kommunikationsschnittstelle (52) an das Master-Device (30) gesendet (118) werden müssen).

2. Verfahren (100) nach einem der vorhergehenden Ansprüche, wobei die ersten Daten (12) Zeitreihendaten sind.

3. Verfahren (100) nach einem der vorhergehenden Ansprüche, wobei die Datenverarbeitungsstrategie wenigstens eines von Datenaggregation, Datenkompression, Datenauswahl, Daten-Neuabtastung, Datenimputation, Datenerweiterung oder Rohdatenverarbeitung ist.

4. Verfahren (100) nach einem der vorhergehenden Ansprüche, wobei der Schritt des Bestimmens (108) der Datenverarbeitungsstrategie den Schritt des Bestimmens (112) eines Aggregationsparameters (15) der ersten Daten (12) umfasst, der eine Strategie in dem wenigstens einen Client-Device (20) dahingehend beeinflusst, wie die ersten Daten (12) aggregiert werden müssen.

5. Verfahren (100) nach Anspruch 4, wobei, wenn gemäß dem Aggregationsparameter (15) entschieden wird, die ersten Daten (12) zu aggregieren, eine Datenaggregation (114) wenigstens eines Teils der ersten Daten (12) durchgeführt wird, um zweite Daten (14) auf Grundlage der Datenverarbeitungsstrategie der ersten Daten (12) zu erhalten, wobei die Datenaggregation ferner den Schritt des Bestimmens (116) eines Übertragungsformats umfasst, das dem Datentyp der zweiten Daten (14) entspricht, um zu entscheiden, welche der zweiten Daten (14) durch das wenigstens eine Client-Device (20) an das Master-Device (30) gesendet werden müssen.

6. Verfahren (100) nach Anspruch 5, wobei das Übertragungsformat bei der Datenaggregation auf wenigstens einer Aggregationsregel basiert, die vorab durch das Master-Device (30) bestimmt und dem wenigstens einen Client-Device (20) bereitgestellt worden ist.

7. Verfahren (100) nach einem der vorhergehenden Ansprüche, wobei das verteilte Netzwerk (70) zwischen dem Master-Device (30) und dem wenigstens einen Client-Device (20) hierarchisch oder Peer-to-Peer-artig eingerichtet ist.

8. Computer, umfassend einen Prozessor, der dazu eingerichtet ist, das Verfahren nach einem der vorhergehenden Ansprüche 1 bis 7 durchzuführen.

9. Computerprogrammprodukt, umfassend Anweisungen, die, wenn das Computerprogramm durch einen Prozessor eines Computers ausgeführt wird, den Computer veranlassen, das Verfahren nach einem der Ansprüche 1 bis 7 durchzuführen.

10. Maschinenlesbarer Datenträger, der das Computerprogramm nach Anspruch 9 enthält.

## Revendications

1. Procédé (100) pour permettre un traitement efficace de données dans un réseau distribué (70) de dispositifs (20, 30), comprenant :
- la collecte (102), par au moins un dispositif client (20), de premières données (12) envoyées par au moins un dispositif d'usine (40) via une première interface de communication (50) ;
- la mémorisation (104) des premières données (12), par l'au moins un dispositif client (20), dans une mémoire de données (60) de l'au moins un dispositif client (20) ;
- le profilage (106) des premières données (12), par l'au moins un dispositif client (20), pour obtenir des informations caractéristiques des premières données (12) collectées, les informations caractéristiques des premières données (12) comportant au moins un type de premières données, **caractérisé en ce que** l'au moins un type de premières données (12) est l'un parmi au moins des données brutes, des données fréquemment consultées, des données consultées occasionnellement ou des données rarement consultées, qui indique une pertinence d'envoi des premières données (12) du dispositif client (20) au dispositif maître (30) ;
- la détermination (108), par l'au moins un dispositif-client (20), d'une stratégie de traitement de données à partir d'un résultat des informations caractéristiques des premières données (12), la détermination de la stratégie de traitement de données comprenant la détermination d'un paramètre d'agrégation des premières données ;
- le traitement (110), par l'au moins un dispositif client (20), des premières données (12) selon la stratégie de traitement des données par agrégation des premières données selon le paramètre d'agrégation et décision de quelles données parmi premières données agrégées (12) doivent être envoyées (118) au dispositif maître (30) via une deuxième interface de communication (52).

2. Procédé (100) selon l'une quelconque des revendications précédentes, dans lequel les premières données (12) sont des données de séries chronologiques.

3. Procédé (100) selon l'une quelconque des revendications précédentes, dans lequel la stratégie de traitement de données est au moins l'une parmi l'agrégation de données, la compression de données, la sélection de données, le rééchantillonnage de données, l'imputation de données, l'augmentation de données ou le traitement de données brutes.

4. Procédé (100) selon l'une quelconque des revendications précédentes, dans lequel l'étape de détermination (108) de la stratégie de traitement de données comprend l'étape de détermination (112) d'un paramètre d'agrégation (15) des premières données (12) qui influence une stratégie dans l'au moins un dispositif client (20) sur la façon dont les premières données (12) doivent être agrégées.

5. Procédé (100) selon la revendication 4, dans lequel, lorsqu'il est décidé en fonction du paramètre d'agrégation (15) d'agréger les premières données (12), il est réalisé (114) une agrégation de données d'au moins une partie des premières données (12) pour obtenir des deuxièmes données (14) selon la stratégie de traitement de données des premières données (12), l'agrégation de données comprenant en outre l'étape de détermination (116) d'un format de transmission correspondant au type de données des deuxièmes données (14) afin de décider lesquelles des deuxièmes données (14) doivent être envoyées au dispositif maître (30) par l'au moins un dispositif client (20).

6. Procédé (100) selon la revendication 5, dans lequel le format de transmission dans l'agrégation de données est basé sur au moins une règle d'agrégation qui a été déterminée à l'avance par le dispositif maître (30) et fournie à l'au moins un dispositif client (20).

7. Procédé (100) selon l'une quelconque des revendications précédentes, dans lequel le réseau distribué (70) est établi d'une manière hiérarchique ou de manière pair-à-pair entre le dispositif maître (30) et l'au moins un dispositif client (20).

8. Ordinateur comprenant un processeur configuré pour mettre en œuvre le procédé selon l'une quelconque des revendications 1 à 7.

9. Produit de programme informatique comprenant des instructions qui, lorsque le programme informatique est exécuté par un processeur d'un ordinateur, amènent l'ordinateur à mettre en œuvre le procédé selon l'une quelconque des revendications 1 à 7.

10. Support de données lisible par machine contenant le programme informatique selon la revendication 9.
